# EUROPÄISCHE PATENTSCHRIFT

(11) **EP 3 117 112 B1**
(45) Veröffentlichungstag und Bekanntmachung des Hinweises auf die Patenterteilung: **11.12.2019**
(21) Anmeldenummer: 15725986.2
(22) Anmeldetag: 11.03.2015
(51) Int. Cl.: F16B 37/04

(54) **BEFESTIGUNGSSYSTEM ZUM MONTIEREN VON GERÄTEN, INSBESONDERE ELEKTROGERÄTEN**
FASTENING SYSTEM FOR ASSEMBLING APPLIANCES, IN PARTICULAR ELECTRICAL APPLIANCES
SYSTÈME DE FIXATION SERVANT À MONTER DES APPAREILS, EN PARTICULIER DES APPAREILS ÉLECTRIQUES

(30) Priorität: 12.03.2014 DE 102014103318; 12.03.2014 DE 102014103338
(43) Veröffentlichungstag der Anmeldung: 18.01.2017
(73) Patentinhaber: Rittal GmbH & Co. KG, 35745 Herborn (DE)
(72) Erfinder: THIELMANN, Bodo, 35768 Siegbach (DE); SCHAFFER, Kurt-Michael, 90542 Eckental (DE); TERWIJN, Koen, 2806 PM Gouda (NL)
(74) Vertreter: Angerhausen, Christoph
(86) Internationale Anmeldenummer: PCT/DE2015/100103
(87) Internationale Veröffentlichungsnummer: WO 2015/135535

(56) Entgegenhaltungen:
- EP-A1- 0 751 308
- EP-A1- 1 324 647
- EP-A2- 1 903 219
- DE-C1- 4 431 246
- DE-C1- 19 544 834
- FR-A1- 2 584 465
- JP-U- S5 046 854
- JP-U- S5 753 694

## Beschreibung

Die Erfindung betrifft ein Befestigungssystem zum Montieren von Geräten, insbesondere Elektrogeräten, mit mindestens einer mit Durchbrüchen versehenen Profilschiene und mit mindestens einem Schnellbefestiger, der einen Korpus aufweist, in dem wenigstens ein Innengewinde ausgebildet ist, wobei am Korpus ein Klemmblatt mit derselben Länge wie der des Korpus angebracht ist, das zwischen sich und dem Korpus einen Freiraum zur Aufnahme der Profilschiene ausbildet und den Korpus reibschlüssig an der Profilschiene hält.

Profilschienen sind in vielen Ausgestaltungen bekannt, ein Beispiel zeigt die DE 20 2012 002 005 U1. Bekannte Profilschienen sind als gelochte Profilschienen mit einer Lochreihe zum Einclipsen von sogenannten Käfigmuttern versehen. Käfigmuttern sind meist quadratische Muttern, die in einem ebenfalls quadratischen Käfig aus Blech gefasst sind. Mittels des Käfigs kann die Mutter an einem Blech festgelegt werden, so dass auch an dünnen Blechen, wie Profilschienen, in die kein Gewinde geschnitten werden kann, ein Gewinde bereitgestellt werden kann. Käfigmuttern sind in der DIN 557 genormt.

Üblicherweise sind Profilschienen an den Seitenwänden von Racks befestigt, so dass 19-Zoll-Industrienormgeräte durch die in der Frontblende rechts und links vorgesehenen geräteseitigen Befestigungslöcher an dieser angeschraubt und sicher gehalten werden können. Im Regelfall werden die Geräte mit vier Schrauben in den Eckbereichen ihrer Frontplatte befestigt, manchmal auch mit zwei Schrauben an beiden Enden der Mittellinie der Frontplatten. Die Höhe der Frontplatten der Industrienormgeräte richtet sich nach einem Raster in Höheneinheiten, wobei eine Höheneinheit mit 1.75 Zoll, also etwa 44.45 mm, spezifiziert ist.

Ein 19-Zoll-Racksystem folgt ebenfalls gewissen Standards bzw. ist genormt, beispielsweise nach IEC 60297 oder nach dem entsprechenden metrischen Systemraster nach IEC 60917.

Profilschienen können auch außerhalb von Racks eingesetzt werden, bis hin zur einzelnen Schiene, die horizontal oder vertikal verbaut ist.

Wenn Käfigmuttern bei der Befestigung von Geräten in 19-Zoll-Racksystemen verwendet werden sollen, weist die entsprechende Profilschiene ein quadratisches Loch auf, das etwas kleiner ist als der Käfig, so dass eine Auflage zwischen Blech und Mutter zur Aufnahme der axialen Gewindekraft vorhanden ist. Die Käfigmuttern müssen von Hand vorgespannt werden, um diese in den quadratischen Ausschnitten der Profilschienen in Position zu bringen, wobei die Gefahr besteht, dass sie verkanten und dann abrutschen können. Das Entfernen einer Käfigmutter ist dementsprechend auch umständlich und erfordert nicht selten einige Mühe. Bei einer Käfigmutter kann somit von einer Schnellbefestigung eigentlich nicht die Rede sein.

Das Dokument FR 2 584 465 A1 beschreibt einen Schnellbefestiger, bei dem eine Formschlussaufnahme für eine Mehrkantmutter in einem Oberteil und einem Unterteil des Korpus ausgebildet ist. Das Oberteil kann von dem Unterteil abgeklappt werden.

Das Dokument EP 1 903 219 A2 offenbart einen Schnellbefestiger, der mehrere nebeneinander angeordnete Innengewinde aufweist.

Es ist daher die Aufgabe der vorliegenden Erfindung, ein Befestigungssystem zum Montieren von Geräten zur Verfügung zu stellen, mit dem eine Profilschiene schnell an der gewünschten Position mit einem Innengewinde ausgestattet werden kann.

Diese Aufgabe wird durch ein Befestigungssystem nach Anspruch 1 gelöst. Vorteilhafte Ausgestaltungen sind Gegenstand der Unteransprüche.

Erfindungsgemäß ist vorgesehen, dass der Korpus über seine Länge zumindest zwei voneinander beabstandete Innengewinde aufweist, wobei in einer exakten Position des Schnellbefestigers in Bezug auf die Profilschiene jedes der Innengewinde mit einem der Durchbrüche einer Profilschiene zur Deckung gebracht ist, und dass der Korpus für jedes Innengewinde einen Schacht aufweist, in dem eine Mutter verdrehsicher positioniert ist, wobei die Mutter eine Kastenmutter ist, die verliersicher in dem ihr zugeordneten Schacht sitzt.

Da das Innengewinde in den Korpus integriert ist, wird immer eine exakte relative Positionierung wenigstens zweier Innengewinde eingehalten, wobei der Korpus so lange entlang der Profilschiene verschoben werden kann, bis die Deckung der Innengewinde mit dem jeweils gewünschten Durchbruch erreicht ist. Der Schnellbefestiger ist in einer exakten Position, wenn jedes der Innengewinde über einem Durchbruch einer Profilschiene liegt.

Das Innengewinde kann dazu dienen, eine Schraube, einen Bolzen oder dergleichen mit einem entsprechenden Außengewinde aufzunehmen.

Da die nebeneinanderliegenden Durchbrüche zueinander ausgerichtet sind, wird so eine Längsrichtung der Profilschiene definiert. Die Querrichtung der Profilschiene, in der lediglich ein Durchbruch überstrichen wird, ist senkrecht zur Längsrichtung definiert. Ein Schnellbefestiger gemäß der vorliegenden Erfindung wird zunächst in Querrichtung auf die Profilschiene gesetzt und kann dann, da er nur durch Reibkräfte gehalten wird, in Längsrichtung der Profilschiene verschoben werden. Alternativ oder zusätzlich kann der Schnellbefestiger durch kraftschlüssige Verbindungselemente, wie zum Beispiel Rastelemente, die positionsgenau an der Profilschiene zugeordnet und gehalten werden können, an der Profilschiene festgelegt werden. Das Abnehmen des Schnellbefestigers von der Profilschiene gelingt ebenfalls in jeder Position durch Ziehen in Querrichtung, gegebenenfalls unterstützt durch eine Schwenkbewegung.

Bei einer Ausgestaltung ist das Klemmblatt federelastisch am Korpus angebracht, so dass gewährleistet ist, dass der Schnellbefestiger schwimmend über die Profilschiene bewegt werden kann, ohne dass er den Reibschluss bzw. Kraftschluss verliert.

Weiterhin kann der Korpus im Wesentlichen quaderförmig ausgebildet. Dabei kann vorgesehen sein, dass der Korpus eine angeschrägte Kante als Aufsteckhilfe auf die Profilschiene aufweist.

Erfindungsgemäß ist die Mutter eine Kastenmutter, vorzugsweise mit rechteckigem oder quadratischem Querschnitt.

Ferner kann vorgesehen sein, dass sich das Klemmblatt in einer exakten Position in Querrichtung über die Durchbrüche der Profilschiene hinweg erstreckt. Damit ist ein Verkippen des Korpus ausgeschlossen, wenn der Schnellbefestiger auf die Profilschiene aufgesetzt wird. Um die Möglichkeit des Verschraubens weiter zuzulassen, sollte zumindest bei dieser Ausführungsform vorgesehen sein, dass das Klemmblatt Öffnungen aufweist, die jeweils mit einem zugeordneten Innengewinde des Korpus fluchtend ausgerichtet sind.

Um weiter den Reibschluss zu gewährleisten, sind der Korpus und das Klemmblatt relativ zueinander so angeordnet, dass zwischen ihnen ein sich zu einer freien Längskante des Klemmblatts hin verjüngender Freiraum verbleibt.

Ferner kann der Korpus und/oder oder auch das Klemmblatt mit die Reibung zur Profilschiene erhöhenden Mitteln ausgestattet sein. Dies können Riffelungen sein, die beispielsweise am Korpus angebracht sind.

Nach einer weiteren Ausführungsform ist das Klemmblatt im Querschnitt L-förmig, wobei die Länge eines ersten Schenkels größer ist als die Dicke der Profilschiene im Bereich der Durchbrüche. Die Länge eines zweiten Schenkels ist vorzugsweise so gewählt, dass das Klemmblatt die Innengewinde des Korpus zumindest teilweise überdeckt.

Das Klemmblatt kann mindestens eine Ausnehmung aufweisen, die jeweils in einer exakten Position in Bezug auf die Profilschiene an der Profilschiene ausgebildete Markierungen freilegt. Derartige Markierungen erleichtern das verkippungsfreie Anbauen von Geräten an zwei gegenüberstehenden Profilschienen.

Auch kann vorgesehen sein, dass der Korpus und/oder das Klemmblatt mindestens einen in den Freiraum ragenden Noppen aufweist, der den Schnellbefestiger in Bezug auf die Profilschiene in einer exakte Position hält, in der der Noppen in einer Ausnehmung oder einem Durchlass in der Profilseite aufgenommen ist.

Die Profilschiene kann Teil einer Montageanordnung sein, wobei die Durchbrüche in Richtung der Profilschiene gleich beabstandet sind und wobei drei aufeinanderfolgende Durchbrüche eine Höheneinheit, beispielsweise eines Rackrahmens, definieren.

Um einen Potentialausgleich zwischen der Profilschiene und dem Schnellbefestiger zu gewährleisten, kann der Schnellbefestiger ein Potentialausgleichselement aufweisen, das ein elektrisch leitfähiges Material aufweist oder daraus besteht und sich sowohl in den Freiraum hineinerstreckt, als auch das Innengewinde bzw. eine das Innengewinde bereitstellende Mutter oder dergleichen elektrisch kontaktiert.

Das Potentialausgleichselement kann weiterhin eine Oberfläche des Klemmblatts überragen, die dem Freiraum abgewandt ist. Das Potentialausgleichselement kann in den Korpus und/oder das Klemmblatt vollständig oder teilweise integriert, beispielsweise eingegossen, sein. Es kann auch das Innengewinde elektrisch kontaktieren und das Klemmblatt an einer Außenseite umgreifen

Weiterhin kann das Klemmblatt aus einem ersten Material und das Potentialausgleichselement aus einem zweiten Material bestehen, wobei das erste Material weicher als das zweite Material ist, und wobei das Potentialausgleichselement mit einem Stützabschnitt, der in eine Kontaktspitze übergeht in den Freiraum hineinragt, so dass die Kontaktspitze beim Aufsetzen des Schnellbefestigers auf die Profilschiene durch die Oberfläche des Klemmblatts, die dem Freiraum abgewandt ist, gedrückt wird. Das zweite Material ist dabei vorzugsweise federelastisch. Das Potentialausgleichselement kann dabei als eine Kontaktfeder ausgebildet sein.

Weiterhin kann dabei die Kontaktspitze des Potentialausgleichselements von dem ersten Material des Klemmblatts berührungssicher umschlossen sein, so dass die erst beim Aufsetzen des Schnellbefestigers auf die Profilschiene aus dem Klemmblatts herausgedrückt wird.

Bei einer Ausführungsform ist der Korpus aus Kunststoff und das Klemmblatt aus einem Metall ausgebildet ist, wobei das Klemmblatt einstückig und unlösbar mit dem Korpus verbunden und vorzugsweise in den Korpus eingegossen ist.

Weiterhin kann das Klemmblatt an seinem zweiten Schenkel mindestens eine in Form eines Ausbruchs ausgebildete und in den Freiraum hineinragende Kontaktfeder für die elektrische Kontaktierung der Profilschiene aufweisen.

Darüber hinaus kann vorgesehen sein, dass das Klemmblatt an seiner von dem Freiraum abgewandten Oberfläche mindestens eine in Form eines Ausbruchs ausgebildete Kontaktfeder für die elektrische Kontaktierung eines elektrischen Geräts aufweist.

Bei einer Ausführungsform ist der Schnellbefestiger als Endlosware, Rollenware oder Stangenware mit einer Vielzahl Innengewinden bereitgestellt, wobei der Korpus des Schnellbefestigers in gleichartige oder sich in ihrer Länge unterscheidende Gehäuseabschnitte, die jeweils eine bestimmte Anzahl Innengewinde aufweisen, unterteilt ist, und wobei die Gehäuseabschnitte über Sollbruchstellen miteinander verbunden sind.

Alternativ können auch mehrere Schnellbefestiger entlang eines bedarfsweise ablängbaren Verbindungsstreifens unter Beibehaltung des Abstands oder eines ganzzahligen Vielfachen des Abstands zwischen den Innengewinden angeordnet sein.

Im Folgenden soll die Erfindung lediglich beispielhaft anhand der beigefügten Zeichnung erläutert werden. Die Darstellungen der Figuren sind nicht notwendigerweise maßstabsgetreu. Es zeigt:
- Fig. 1: eine perspektivische Ansicht einer Ausführungsform eines Schnellbefestigers für ein Befestigungssystem gemäß der vorliegenden Erfindung von der Seite des Klemmblattes her gesehen;
- Fig. 2: eine perspektivische Ansicht des Schnellbefestigers von der Seite des Korpus her;
- Fig. 3: eine Ansicht des Schnellbefestigers, aus der insbesondere die Lage der Schächte für die Aufnahme von Muttern hervorgeht;
- Fig. 4: eine weitere Ansicht des Schnellbefestigers, die zeigt, wie Muttern einzusetzen sind und wie die Erdung erfolgt;
- Fig. 5: eine Schnittansicht eines Schnellbefestigers, der auf einer Profilschiene sitzt;
- Fig. 6: eine Schnittansicht eines Schnellbefestigers auf einer Profilschiene mit Verschraubung;
- Fig. 7: eine Ansicht des Schnellbefestigers, aus der weitere Details für die Positionierung hervorgehen;
- Fig. 8: eine Schnittansicht des Schnellbefestigers mit einem Noppen für die Montage;
- Fig. 9: eine perspektivische Ansicht eines Schnellbefestigers auf einer Profilschiene;
- Fig. 10: ein Aufbauschema eines Schnellbefestigers;
- Fig. 11: Varianten des Schnellbefestigers, wie sie in einem Befestigungssystem zum Montieren von Geräten eingesetzt werden können; und
- Fig. 12: eine Schnittansicht eines Schnellbefestigers mit Potentialausgleichselement; und
- Fig. 13: eine Schnittansicht eines weiteren Schnellbefestigers mit Potentialausgleichselement.

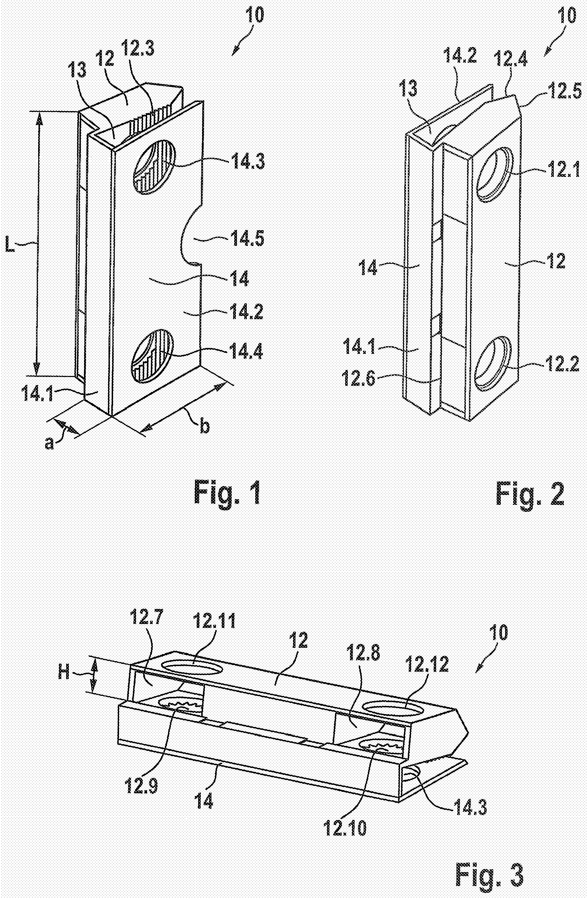

Fig. 1 zeigt eine perspektivische Ansicht einer Ausführungsform eines Schnellbefestigers 10 für ein Befestigungssystem zum Montieren von Geräten, insbesondere von Elektrogeräten, der aus einem im Wesentlichen quaderförmigen Korpus 12 und einem Klemmblatt 14 aufgebaut ist. Der Korpus 12 hat eine Länge L, ebenso wie das Klemmblatt 14, das im Montagezustand den Korpus 12 reibschlüssig an einer Profilschiene hält. Bei der vorliegenden Ausführungsform ist das Klemmblatt L-förmig, wobei ein Schenkel 14.1 eine Länge a aufweist, ein zweiter Schenkel 14.2, der senkrecht zu dem ersten Schenkel 14.1 verläuft, eine Länge b. Das Klemmblatt 14 weist weiterhin zwei Öffnungen 14.3, 14.4 in dem Schenkel 14.2 auf, die, wie im Zusammenhang mit Fig. 2 noch beschrieben wird, in bestimmter Weise positioniert sind. Mittig zwischen den Öffnungen 14.3, 14.4 ist an der freiliegenden Kante des Schenkels 14.2 des Klemmblattes 14 eine etwa halbkreisförmige Ausnehmung 14.5 vorgesehen. In der Fig. 1 ist ferner zu erkennen, dass am Korpus 12 auf der Seite, die dem Klemmblatt 14 zugewandt ist, eine Riffelung 12.3 vorgesehen ist, die dazu dient, den Reibschluss zwischen dem Schnellbefestiger 10 und einer Profilschiene zu verbessern. Zwischen dem Korpus 12 und dem Klemmblatt 14 ist ein Freiraum 13 verblieben, der sich ausgehend vom Schenkel 14.1 zum freien Ende des Schenkels 14.2 zunächst verjüngt und dann aufgrund der besonderen Ausgestaltung des Korpus 12 wieder erweitert.

Die Gestaltung des Korpus 12 geht besser aus der perspektivischen Ansicht der Fig. 2 hervor. Der Korpus 12 umfasst zwei voneinander beabstandete Innengewinde 12.1, 12.2, die mit den Öffnungen 14.3, 14.4 des Klemmblattes 14 (Fig. 1) im Wesentlichen fluchten. Der Korpus 12 weist weiterhin an seinem Ende, das dem freien Ende des Schenkels 14.2 des Klemmblattes gegenübersteht, eine erste Abschrägung 12.4 und eine zweite Abschrägung 12.5 auf. Die erste Abschrägung 12.4 dient als Aufschubhilfe beim Aufsetzen auf eine Profilschiene. Durch diese Abschrägung 12.4 wird der sich zunächst verjüngende Freiraum 13 zwischen dem Korpus 12 und dem Klemmblatt 14 wieder aufgeweitet. Der Korpus 12 weist weiterhin seinem freien Ende gegenüberliegend eine Stufe 12.6 auf, an der der Schenkel 14.1 des Klemmblattes 14 festgelegt ist. Auf diese Weise wird erreicht, dass das Klemmblatt 14 federelastisch am Korpus 12 angebracht ist, wobei durch diese Maßnahme der Reibschluss zwischen dem Schnellbefestiger 10 und einer Profilleiste verbessert wird.

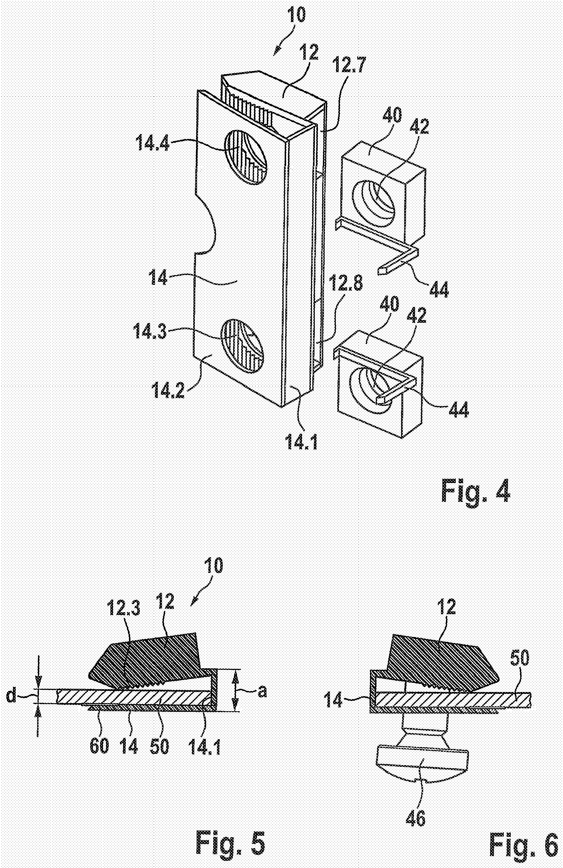

Fig. 3 zeigt den Schnellbefestiger 10 der Fig. 2 in einer etwa um 90° gedrehten Position, aus der besonders gut die Lage von Schächten 12.7, 12.8 hervorgeht, die für die Aufnahme von Muttern gedacht sind, wie im Zusammenhang mit Fig. 4 erläutert wird. Jeder Schacht 12.7, 12.8 ist im Wesentlichen quaderförmig und erstreckt sich über nahezu die gesamte Höhe H des Korpus 12. Die Abmessungen der Schächte 12.7, 12.8 sind so gewählt, dass sich in ihnen eine handelsübliche Kastenmutter oder eine sonstige Mutter verdreh- und verliersicher unterbringen lässt, wie sie auch bei Käfigmuttern zum Einsatz kommen. Um das Gewinde der Kastenmutter zugänglich zu machen, sind die Schächte 12.7, 12.8 jeweils mit einander gegenüberstehenden Öffnungen 12.9, 12.11 bzw. 12.10, 12.12 versehen, die mit den schon in der Fig. 1 angesprochenen Öffnungen 14.3, 14.4 des Klemmblattes 14 fluchten. Durch die in der Fig. 3 gut erkennbare geneigte Lage des Korpus 12 in Bezug auf das Klemmblatt 14 wird verhindert, dass in den Schächten 12.7, 12.8 sitzende Muttern versehentlich aus dem Schnellbefestiger 10 herausrutschen.

Fig. 4 zeigt in einer schematischen Darstellung, wie zwei Muttern 40 in die Schächte 12.7 und 12.8 des Korpus 12 einzusetzen sind. Jede Mutter 40 liegt an einem Erdungsbügel 44 an, der im montierten Zustand über den Schenkel 14.1 des Klemmblattes 14 geführt und am Schenkel 14.2 eingerastet wird. Im montierten Zustand sitzen die Muttern 40 in den jeweiligen Schächten 12.7, 12.8 so, dass ihre Innengewinde 42 nicht nur mit den Öffnungen 12.9, 12.11; 12.10, 12.12 (Fig. 3) des Korpus 12 fluchten, sondern im Wesentlichen auch mit den Öffnungen 14.3, 14.4 des Klemmblattes 14, damit später die gewünschte Verschraubung möglich wird.

Fig. 5 zeigt eine Schnittansicht eines Schnellbefestigers 10, der auf einer Profilschiene 50 sitzt. Es ist zu erkennen, dass die Länge a des ersten Schenkels 14.1 des Klemmblattes 14 größer ist als die Dicke d der Profilschiene 50. Durch die Riffelung 12.3 am Korpus 12, die jetzt auf der Oberfläche der Profilschiene 50 liegt, wird der Reibschluss zwischen dem Schnellbefestiger 10 und der Profilschiene 50 verbessert. Es kann ein Erdungsstreifen 60 vorgesehen sein, um bei unbeschichteten Profilschienen 50 den elektrischen Kontakt noch zu verbessern.

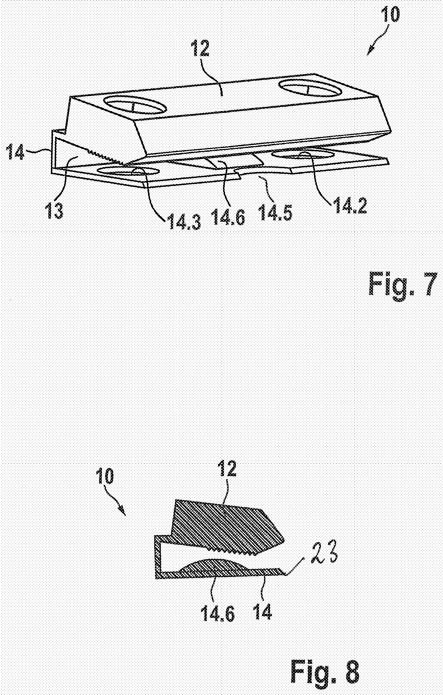

Fig. 6 zeigt die Montagesituation der Fig. 5 in einer um 180° gedrehten Ansicht, wobei eine Schraube 46, wie zuvor in Zusammenhang mit den Fig. 1 bis 4 erläutert, zur Befestigung von Geräten (nicht gezeigt) durch die entsprechenden Öffnungen von Klemmblatt 14 und Korpus 12 in die Gewinde 42 der Muttern 40 (Fig. 4) geschraubt ist. Fig. 7 zeigt eine weitere bauliche Einzelheit des Schnellbefestigers 10, bei der das Klemmblatt 14 einen Noppen 14.6 trägt, der sich in den Freiraum 13 zwischen dem Korpus 12 und dem Klemmblatt 14 erstreckt und mittig zwischen den Öffnungen 14.3, 14.4 nahe der Ausnehmung 14.5 angeordnet ist. Der Noppen 14.6 dient dazu, eine exakte Position des Schnellbefestigers 10 auf einer Profilschiene 50 festzulegen.

Fig. 8 zeigt eine Schnittansicht der Fig. 7 im Bereich des Noppens 14.6, aus der hervorgeht, dass im Nichteinbauzustand des Schnellbefestigers 10 auch im Bereich des Noppens 14.6 eine lichte Weite zwischen dem Korpus 12 und dem Klemmblatt 14 verbleibt.

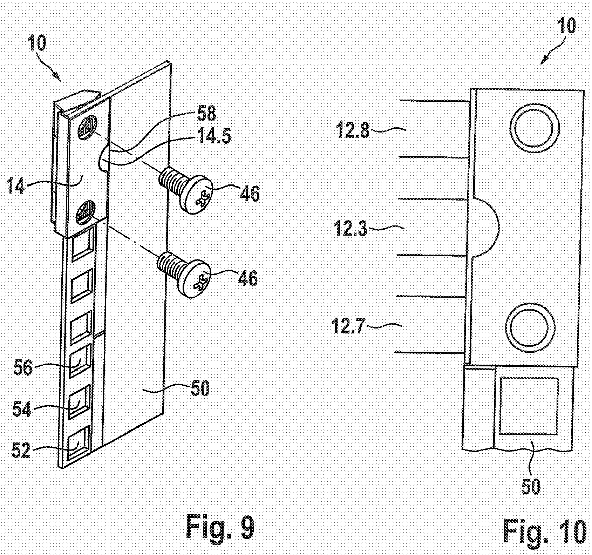

Fig. 9 zeigt in einer perspektivischen Ansicht einen Schnellbefestiger 10, der auf einer Profilschiene 50 sitzt. Die Profilschiene 50 weist regelmäßig beabstandete Durchbrüche 52, 54, 56 für jede Höheneinheit der Profilschiene 50 auf. Die Nummer der Höheneinheit ist neben dem jeweiligen Durchbruch angegeben, normalerweise neben dem mittig liegenden Durchbruch, z.B. 54. In einer exakten Position sitzt also der Schnellbefestiger 10 so, dass die Ausnehmung 14.5 des Klemmblattes 14 gerade die Markierung 58 einer Höheneinheit freilegt. Dann fluchten genau sämtliche Öffnungen des Schnellbefestigers 10 mit den entsprechenden Durchbrüchen (z.B. 52, 56) der Profilschiene 50, so dass mit Hilfe von Schrauben 46 eine positionsgerechte Montage einfach durchgeführt werden kann.

Fig. 10 zeigt eine Draufsicht auf einen Schnellbefestiger 10, der auf einer Profilschiene 50 sitzt. Zwischen den Schächten 12.7 und 12.8 des Korpus (hier nicht sichtbar) kann ein weiterer Schacht 12.3 vorgesehen sein, um die Montagemöglichkeiten zu erweitern.

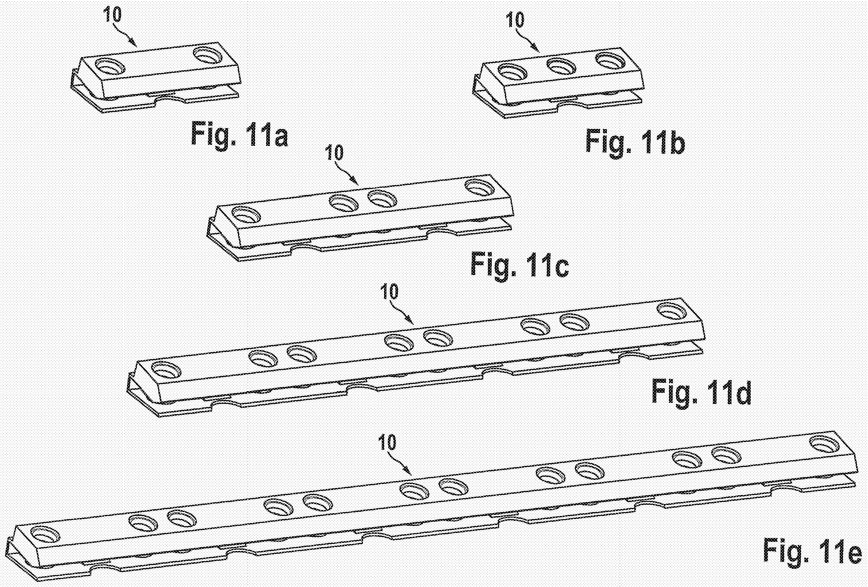

Es lässt sich nämlich dann, wie in Fig. 11 gezeigt, der Schnellbefestiger nach Ausführungsform (a) zu einem Schnellbefestiger nach Ausführungsform (b) ergänzen. Bei entsprechender Ausgestaltung des Klemmblattes mit einer Öffnung, die beispielsweise auch den Noppen (vgl. Fig. 7) durchdringen kann, kann nun ein Gerät, das beispielsweise eine Frontplatte mit einer Höheneinheit umfasst, nicht nur an den vier Ecken, sondern auch oder alternativ befestigt werden.

Weitere Ausführungsformen eines Schnellbefestigers sind möglich, die im Wesentlichen durch Aneinanderreihung von Schnellbefestigern nach den Fig. 1 bis 8 entstehen. So werden bei der Ausführungsform (10) zwei derartige Schnellbefestiger aneinandergereiht, bei der Ausführungsform (d) vier, bei der Ausführungsform (e) sechs. Auch aneinandergereihte Kombinationen der Ausführungsformen (a) und (b) sind möglich.

Mit all dem steht ein Befestigungssystem zur Verfügung, mit dem zur Montage vorgesehene Muttern einfach positioniert werden können, die aber auch ebenso leicht zu entfernen sind, wenn die Bestückung beispielsweise eines Racks geändert wird.

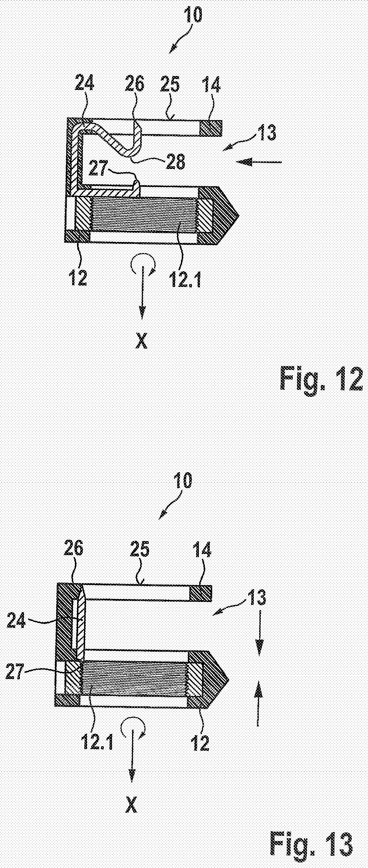

Die Figuren 12 und 13 zeigen Schnittansichten von zwei Ausführungsformen eines Schnellbefestigers 10, welcher ein integriertes Potentialausgleichselement 24 aufweist. Das Potentialausgleichselement 24 ist dazu vorgesehen, um einen elektrischen Potentialausgleich zwischen einer Baugruppe, die über das Befestigungssystem an der Profilschiene festgelegt ist und der Profilschiene herzustellen. Bei der in Figur 12 dargestellten Ausführungsformen ist das Potentialausgleichselement 24 als eine Kontaktfeder ausgebildet, die in den Korpus 12 und das Klemmbaltt14 teilweise integriert ist. Im Bereich des Freiraums 13 zur Aufnahme der Profilschiene ragt das Potentialausgleichselement 24 mit einem Stützabschnitt 28 in den Freiraum 13 hinein. Dies hat zur Folge, dass, wenn eine Profilschiene in den Freiraum 13 eingeschoben wird, die Profilschiene auf den Stützabschnitt 28 trifft und die berührungssicher in dem Klemmblatt 14 aufgenommene Kontaktspitze 26 durch eine von dem Freiraum 13 abgewandte Oberfläche 25 des Klemmblatts 14 aus dem Klemmblatt 14 herausdrückt, so dass sie ein Gerät oder eine Baugruppe, das mithilfe des Befestigungssystems an der Profilschiene festgelegt werden soll, für den Potentialausgleich elektrisch kontaktiert. Es kann auch vorgesehen sein, dass erst mit dem Verschrauben die für das Herausdrücken der Kontaktspitze 26 aus dem Klemmblatt 14 erforderliche Kraft erzeugt wird, so dass erst mit dem Verschrauben die elektrische Kontaktierung für den Potentialausgleich erfolgt. Darüber hinaus weist das Klemmblatt 14 an einem der Kontaktspitze 26 gegenüber liegenden Ende eine weitere Kontaktspitze 27 auf, welche an der dem Freiraum 13 zugewandten Seite des Korpus 12 aus dem Korpus 12 heraus in den Freiraum 13 hineinragt, so dass mit dem Einschieben einer Profilschiene in den Freiraum 13 bzw. mit dem Verschrauben eine elektrische Kontaktierung zwischen der weiteren Kontaktspitze 27 und der Profilschiene erfolgt. Das Klemmblatt 14 und der Korpus 12 können beispielsweise aus Kunststoffspritzguss gefertigt sein, während das Potentialausgleichselement 24 als ein metallisches Bauteil ausgeführt ist. Weiterhin kann das Potentialausgleichselement 24 derart in das Klemmblatt 14 bzw. dem Korpus 12 eingelassen sein, dass es im unverbauten Zustand lediglich mit der weiteren Kontaktspitze 27 und dem als Umkantung ausgebildeten Stützabschnitt 28 aus dem Korpus 12 bzw. dem Klemmblatt 14 herausragt. Das Klemmblatt 14 und der Korpus 12 können einstückig aus Kunststoff ausgebildet sein, wobei diesem Kunststoffbauteil aus Korpus 12 und Klemmblatt 14 durch das Potentialausgleichelement 24 eine zusätzliche Stabilität und Elastizität verliehen wird.

Bei den in Figur 12 und 13 dargestellten Ausführungsformen ist das Klemmblatt 14 im Wesentlichen aus zwei senkrecht zueinander angeordneten Seiten ausgebildet, die zusammen mit dem Korpus 12 den Freiraum 13 an drei Seiten abgrenzen und eine Einstecköffhung für eine Profilschiene offenlassen. Bei der in Figur 13 abgebildeten Ausführungsform ist in der das Klemmblatt 14 mit dem Korpus 12 verbindenden Seite des Klemmblatts 14 ein Potentialausgleichselement 24 mit gegenüberliegenden Kontaktspitzen 26, 27 eingelassen. In dem in Figur 13 dargestellten, unverarbeiteten Zustand des Schnellbefestigers kontaktiert eine erste Kontaktspitze 27 das Innengewinde, beispielsweise eine Käfigmutter oder dergleichen, während die gegenüberliegende Kontaktspitze 26 gerade kurz unterhalb der äußeren Oberfläche 25 innerhalb des Klemmblatts 14 angeordnet ist. Wird nunmehr eine Profilschiene in den Freiraum 13 eingesetzt und eine Befestigungsschraube in die Innengewinde durch das Klemmblatt 14 hindurch eingeschraubt, so wird das Klemmblatt 14 derart deformiert, dass das Potentialausgleichselement 24 mit seiner Kontaktspitze 26 aus der Oberfläche 25 des Klemmblatts 14 heraustritt und so mit Hilfe des Befestigungssystems die an der Profilschiene verschraubte Baugruppe elektrisch kontaktiert. Das Klemmblatt 14 ist vorzugsweise aus einem Kunststoffmaterial hergestellt, während das Innengewinde 12.1 eine Metallmutter oder dergleichen sein kann, so dass das Potentialausgleichselement 24 über die Kontaktspitze 27 an dem Innengewinde 12.1 abgestützt ist und elektrisch dieses kontaktiert, so dass gewährleistet wird, dass das Potentialausgleichselement 24 durch die Oberseite 25 beim Verschrauben heraustritt.

## Patentansprüche

1. Befestigungssystem zum Montieren von Geräten, insbesondere Elektrogeräten, mit mindestens einer mit Durchbrüchen (52, 54, 56) versehenen Profilschiene (50) und mit mindestens einem Schnellbefestiger (10), der einen Korpus (12) aufweist, wobei am Korpus (12) ein Klemmblatt (14) mit derselben Länge (L) wie der des Korpus (12) angebracht ist, das zwischen sich und dem Korpus (12) einen Freiraum (13) zur Aufnahme der Profilschiene (50) ausbildet und den Korpus (12) reibschlüssig an der Profilschiene (50) hält,
**dadurch gekennzeichnet, dass** der Korpus (12) über seine Länge (L) zumindest zwei voneinander beabstandete Innengewinde (12.1, 12.2) aufweist, wobei in einer exakten Position des Schnellbefestigers (10) in Bezug auf die Profilschiene (50) jedes der Innengewinde (12.1. 12.2) mit einem der Durchbrüche (52, 56) der Profilschiene (50) zur Deckung gebracht ist, und dass der Korpus für jedes Innengewinde einen Schacht (12.9, 12.10) aufweist, in dem eine Mutter (40) verdrehsicher positioniert ist, wobei die Mutter (40) eine Kastenmutter ist, die verliersicher in dem ihr zugeordneten Schacht (12.9, 12.10) sitzt.

2. Befestigungssystem nach Anspruch 1, **dadurch gekennzeichnet, dass** das Klemmblatt (14) federelastisch am Korpus (12) angebracht ist.

3. Befestigungssystem nach Anspruch 1, **dadurch gekennzeichnet, dass** der Korpus (12) im Wesentlichen quaderförmig ausgebildet ist.

4. Befestigungssystem nach Anspruch 1, **dadurch gekennzeichnet**, das der Korpus (12) eine angeschrägte Kante (12.4) als Aufsteckhilfe auf die Profilschiene (50) aufweist.

5. Befestigungssystem nach Anspruch 1, **dadurch gekennzeichnet, dass** sich das Klemmblatt (14) in einer exakten Position in Querrichtung über die Durchbrüche (52, 54, 56) der Profilschiene (50) hinweg erstreckt.

6. Befestigungssystem nach einem der vorangegangenen Ansprüche, **dadurch gekennzeichnet, dass** das Klemmblatt (14) Öffnungen (14.3, 14.4) aufweist, die jeweils mit einem zugeordneten Innengewinde (12. 1, 12.2) des Korpus (12) fluchtend ausgerichtet sind.

7. Befestigungssystem nach einem der vorangegangenen Ansprüche, **dadurch gekennzeichnet, dass** der Korpus (12) und das Klemmblatt (14) relativ zueinander so angeordnet sind, dass zwischen ihnen ein sich zu einer freien Längskante (23) des Klemmblatts (14) hin verjüngender Freiraum (13) ausgebildet ist.

8. Befestigungssystem nach Anspruch 1, **dadurch gekennzeichnet, dass** der Korpus (12) und/oder das Klemmblatt (14) die Reibung zur Profilschiene (50) erhöhende Mittelaufweist.

9. Befestigungssystem nach Anspruch 8, **dadurch gekennzeichnet**, das als die Reibung zur Profilschiene (50) erhöhende Mittel Riffelungen (12.3) vorgesehen sind.

10. Befestigungssystem nach Anspruch 1, **dadurch gekennzeichnet, dass** das Klemmblatt (14) im Querschnitt L-förmig ist, wobei die Länge (a) eines ersten Schenkels (14.1) größer ist als die Dicke (d) der Profilschiene (50) im Bereich der Durchbrüche (53, 54, 56).

11. Befestigungssystem nach Anspruch 10, **dadurch gekennzeichnet, dass** die Länge (b) eines zweiten Schenkels (14.2) so gewählt ist, dass das Klemmblatt (14) die Innengewinde (12.1, 12.2) des Korpus (12) zumindest teilweise überdeckt.

12. Befestigungssystem nach Anspruch 1, **dadurch gekennzeichnet, dass** das Klemmblatt (14) mindestens eine Ausnehmung (14.5) aufweist, die jeweils in einer exakten Position in Bezug auf die Profilschiene (50) an der Profilschiene (50) ausgebildete Markierungen (58) freilegt.

13. Befestigungssystem nach Anspruch 1, **dadurch gekennzeichnet, dass** der Korpus (12) und/oder das Klemmblatt (14) mindestens einen in den Freiraum (13) ragenden Noppen (14.6) aufweist, der den Schnellverbinder (10) in Bezug auf die Profilschiene (50) in einer exakten Position hält, in der der Noppen (14.6) in einer Ausnehmung oder einem Durchlass in der Profilseite (50) aufgenommen ist.

14. Befestigungssystem nach einem der vorangegangenen Ansprüche, **dadurch gekennzeichnet, dass** die Profilschiene (50) Teil einer Montageanordnung ist, wobei die Durchbrüche (52, 54, 56) in Richtung der Profilschiene (50) gleich beabstandet sind und wobei drei aufeinanderfolgende Durchbrüche (52, 54, 56) eine Höheneinheit eines Rackrahmens definieren.

15. Befestigungssystem nach einem der vorangegangenen Ansprüche, **dadurch gekennzeichnet, dass** der Schnellbefestiger (10) ein Potentialausgleichselement (24) aufweist, das ein elektrisch leitfähiges Material aufweist oder daraus besteht und sich sowohl in den Freiraum (13) hineinerstreckt, als auch das Innengewinde (12.1, 12.2) elektrisch kontaktiert.

16. Befestigungssystem nach Anspruch 15, **dadurch gekennzeichnet, dass** das Potentialausgleichselement (24) weiterhin eine Oberfläche (25) des Klemmblatts (14) überragt, die dem Freiraum (13) abgewandt ist.

17. Befestigungssystem nach Anspruch 15 oder 16, **dadurch gekennzeichnet, dass** das Klemmblatt (14) aus einem ersten Material und das Potentialausgleichselement (24) aus einem zweiten Material besteht, wobei das erste Material weicher als das erste Material ist, wobei das Potentialausgleichselement (24) mit einem Stützabschnitt (28), der in eine Kontaktspitze (26) übergeht in den Freiraum (13) hineinragt, so dass die Kontaktspitze (26) beim Aufsetzen des Schnellbefestigers (10) auf die Profilschiene (50) durch die Oberfläche (25) des Klemmblatts (14), die dem Freiraum (13) abgewandt ist, gedrückt wird.

18. Befestigungssystem nach Anspruch 17, **dadurch gekennzeichnet, dass** die Kontaktspitze (26) des Potentialausgleichselements (24) von dem ersten Material des Klemmblatts (14) berührungssicher umschlossen ist und beim Aufsetzen des Schnellbefestigers (10) auf die Profilschiene (50) aus dem Klemmblatts (14) herausgedrückt wird.

19. Befestigungssystem nach einem der vorangegangenen Ansprüche, **dadurch gekennzeichnet, dass** der Schnellbefestiger (10) ein Potentialausgleichselement (24) aufweist, das ein elektrisch leitfähiges Material aufweist oder daraus besteht und sich in den Freiraum (13) hineinerstreckt, so dass beim Aufsetzen auf die Profilschiene (50) beim über das Stützelement (28) eine elektrische Kontaktierung mit der Profilschiene (50) hergestellt wird und die Kontaktspitze (26) über der Oberfläche (25) ein weiteres Bauteil, insbesondere ein Elektrogerät elektrisch kontaktiert.

20. Befestigungssystem nach einem der vorangegangenen Ansprüche, **dadurch gekennzeichnet, dass** der Korpus (12) aus Kunststoff und das Klemmblatt (14) aus einem Metall ausgebildet ist, wobei das Klemmblatt (14) einstückig und unlösbar mit dem Korpus (12) verbunden und vorzugsweise in den Korpus (12) eingegossen ist.

21. Befestigungssystem nach Anspruch 20, **dadurch gekennzeichnet, dass** das Klemmblatt (14) an seinem zweiten Schenkel (14.2) mindestens eine in Form eines Ausbruchs ausgebildete und in den Freiraum (13) hineinragende Kontaktfeder für die elektrische Kontaktierung der Profilschiene (50) aufweist.

22. Befestigungssystem nach Anspruch 20 oder 21, **dadurch gekennzeichnet, dass** das Klemmblatt (14) an seiner von dem Freiraum (13) abgewandten Oberfläche (25) mindestens eine in Form eines Ausbruchs ausgebildete Kontaktfeder für die elektrische Kontaktierung eines elektrischen Geräts aufweist.

23. Befestigungssystem nach einem der vorangegangenen Ansprüche, **dadurch gekennzeichnet, dass** der Schnellbefestiger (10) als Endlosware, Rollenware oder Stangenware mit einer Vielzahl Innengewinden (12.1, 12.2, ...) bereitgestellt ist, wobei der Korpus (12) des Schnellbefestigers (10) in gleichartige oder sich in ihrer Länge unterscheidende Gehäuseabschnitte, die jeweils eine bestimmte Anzahl Innengewinde (12.1, 12.2, ...) aufweisen, unterteilt ist, und wobei die Gehäuseabschnitte über Sollbruchstellen miteinander verbunden sind.

24. Befestigungssystem nach einem der vorangegangenen Ansprüche, **dadurch gekennzeichnet, dass** mehrere Schnellbefestiger (10) entlang eines bedarfsweise ablängbaren Verbindungsstreifens unter Beibehaltung des Abstands oder eines ganzzahligen Vielfachen des Abstands zwischen den Innengewinden (12.1, 12.2, ...) angeordnet sind.

## Claims

1. A fastening system for mounting devices, in particular electrical devices, comprising at least one profile rail (50) provided with openings (52, 54, 56) and at least one quick fastener (10) that has a body (12), wherein a clamping blade (14) having the same length (L) as the body (12) is attached to the body (12), forming an open space (13) between itself and the body (12) to receive the profile rail (50) and holding the body (12) by friction to the profile rail (50), **characterized in that** the body (12) along its length (L) has at least two internal threads (12.1, 12.2) spaced apart from each other, wherein each of the internal threads (12.1, 12.2) is brought into alignment with one of the openings (52, 56) of the profile rail (50) in an exact position of the quick fastener (10) with respect to the profile rail (50), and that the body (12) has a hole (12.9, 12.10) for each internal thread in which a nut (40) is positioned secured against rotation, wherein the nut (40) is a cage nut which sits in its assigned hole (12.9, 12.10) in a loss-proof manner.

2. The fastening system according to claim 1, **characterized in that** the clamping blade (14) is attached resiliently to the body (12).

3. The fastening system according to claim 1, **characterized in that** the body (12) is configured essentially cuboid.

4. The fastening system according to claim 1, **characterized in that** the body (12) has a chamfered edge (12.4) to assist in placing it onto the profile rail (50).

5. The fastening system according to claim 1, **characterized in that** the clamping blade (14), in an exact position in the transverse direction extends over the openings (52, 54, 56) of the profile rail (50).

6. The fastening system according to any of the preceding claims, **characterized in that** the clamping blade (14) has openings (14.3, 14.4) that are each oriented in alignment with an assigned internal thread (12.1, 12.2) of the body.

7. The fastening system according to any of the preceding claims, **characterized in that** the body (12) and the clamping blade (14) are arranged relative to one another in such a manner that an open space (13) is formed between them narrowing towards an open longitudinal edge (23) of the clamping blade (14).

8. The fastening system according to claim 1, **characterized in that** the body (12) and/or the clamping blade (14) has means to increase the friction to the profile rail (50).

9. The fastening system according to claim 8, **characterized in that** the means to increase the friction to the profile rail (50) are provided in the form of corrugations (12.3).

10. The fastening system according to claim 1, **characterized in that** the clamping blade (14) is L-shaped in cross-section, wherein the length (a) of a first leg (14.1) is greater than the thickness (d) of the profile rail (50) in the area of the openings (53, 54, 56).

11. The fastening system according to claim 10, **characterized in that** the length (b) of a second leg (14.2) is selected in such a manner that the clamping blade (14) at least partially overlaps the internal threads (12.1, 12.2) of the body (12).

12. The fastening system according to claim 1, **characterized in that** the clamping blade (14) has at least one recess (14.5) which each expose markings (58) on the profile rail (50) when in an exact position with respect to the profile rail (50).

13. The fastening system according to claim 1, **characterized in that** the body (12) and/or the clamping blade (14) has at least one nub (14.6) projecting into the open space (13) which retains the quick fastener (10) in an exact position with respect to the profile rail (50) in which the nub is accommodated in a recess or an opening in the profile rail (50).

14. The fastening system according to any of the preceding claims, **characterized in that** the profile rail (50) is part of a mounting assembly, wherein the openings (52, 54, 56) are equally spaced in direction of the profile rail (50) and wherein three consecutive openings (52, 54, 56) define a unit of height of a rack frame.

15. The fastening system according to any of the preceding claims, **characterized in that** the quick fastener (10) has a potential equalization element (24) which has or consists of an electrically conductive material, and both extends into the open space (13) as well as electrically contacts the internal thread (12.1, 12.2).

16. The fastening system according to claim 15, **characterized in that** the potential equalization element (24) further projects beyond a surface of the clamping blade (14) that faces away from the open space (13).

17. The fastening system according to claim 15 or 16, **characterized in that** the clamping blade (14) consists of a first material and the potential equalization element (24) of a second material, wherein the first material is softer than the second material, wherein the potential equalization element (24) projects into the open space (13) with a supporting section (28) that turns into a contact tip (26), so that the contact tip (26) is pushed through the surface (25) of the clamping blade (14) facing away from the open space (13) when the quick fastener (10) is placed on the profile rail (50).

18. The fastening system according to claim 17, **characterized in that** the contact tip (26) of the potential equalization element (24) is enclosed by the first material of the clamping blade (14) in a contact-safe manner and is pushed out of the clamping blade (14) when the quick fastener (10) is placed on the profile rail (50).

19. The fastening system according to any of the preceding claims, **characterized in that** the quick fastener (10) has a potential equalization element (24) that has or consists of an electrically conductive material and projects into the open space (13) so that when placed on the profile rail (50) an electrical contact is created with the profile rail (50) by way of the support element (28), and the contact tip (26) electrically contacts an additional component, in particular an electrical device, above the surface (25).

20. The fastening system according to any of the preceding claims, **characterized in that** the body (12) is formed of plastic and the clamping blade (14) of a metal, wherein the clamping blade (14) is a integrally formed and connected permanently to the body (12) and is preferably molded into the body (12).

21. The fastening system according to claim 20, **characterized in that** the clamping blade (14) has on its second leg (14.2) at least one contact spring, taking the form of an edge and projecting into the open space (13) for electrically contacting the profile rail (50).

22. The fastening system according to claim 20 or 22, **characterized in that** the clamping blade (14) has at least one contact spring on its surface (25) facing away from the open space (13), taking the form of an edge for electrically contacting an electrical device.

23. The fastening system according to any of the preceding claims, **characterized in that** the quick fastener (10) is provided as endless goods, roll goods or bar goods with a plurality of internal threads (12.1, 12.2), wherein the body (12) of the quick fastener (10) is subdivided into housing sections identical or differing in length that each have a specific number of internal threads (12.1, 12.2) and wherein the housing sections are connected by predetermined breaking points.

24. The fastening system according to any of the preceding claims, **characterized in that** several quick fasteners (10) are arranged along a connecting strip cut to length as required while retaining the spacing or a whole-number multiple of the spacing between the internal threads (12.1, 12.2).

## Revendications

1. Système de fixation pour le montage d'appareils, plus particulièrement d'appareils électriques, avec au moins un rail profilé (50) muni de perçages (52, 54, 56) et avec au moins un dispositif de fixation rapide (10), qui comprend un corps (12), moyennant quoi, sur le corps (12) est montée une lame de serrage (14) avec la même longueur (L) que celle du corps (12), qui forme, entre elle et le corps (12), un espace libre (13) pour le logement du rail profilé (50) et qui maintient le corps (12) par friction contre le rail profilé (50),
**caractérisé en ce que** le corps (12) comprend, sur sa longueur (L), au moins deux filetages internes (12.1, 12.) distants entre eux, moyennant quoi, dans une position exacte du dispositif de fixation rapide (10) par rapport au rail profilé (50), chacun des filetages internes (12.1, 12.2) est mis en correspondance avec un des perçages (52, 56) du rail profilé (50) et **en ce que** le corps comprend, pour chaque filetage interne, un puits (12.9, 12.10), dans lequel un écrou (40) est positionné sans possibilité de rotation, l'écrou (40) étant un écrou-cage, qui repose de manière imperdable dans le puits (12.9, 12.10) correspondant.

2. Système de fixation selon la revendication 1, **caractérisé en ce que** la lame de serrage (14) est montée de manière élastique sur le corps (12).

3. Système de fixation selon la revendication 1, **caractérisé en ce que** le corps (12) présente globalement la forme d'un parallélépipède.

4. Système de fixation selon la revendication 1, **caractérisé en ce que** le corps (12) comprend une arête chanfreinée (12.4) en tant qu'aide à l'emboîtement dans le rail profilé (50).

5. Système de fixation selon la revendication 1, **caractérisé en ce que** la lame de serrage (14) s'étend dans une position exacte dans la direction transversale au-delà des perçages (52, 54, 56) du rail profilé (50).

6. Système de fixation selon l'une des revendications précédentes, **caractérisé en ce que** la lame de serrage (14) comprend des ouvertures (14.3, 14.4) qui sont orientées chacune avec un filetage interne (12.1, 12.2) correspondant du corps (12).

7. Système de fixation selon l'une des revendications précédentes, **caractérisé en ce que** le corps (12) et la lame de serrage (14) sont disposés l'un par rapport à l'autre de façon à ce que, entre eux, soit formé un espace libre (13) se rétrécissant en direction d'une arête longitudinale (23) de la lame de serrage (14).

8. Système de fixation selon la revendication 1, **caractérisé en ce que** le corps (12) et/ou la lame de serrage (14) comprend des moyens augmentant la friction avec le rail profilé (50).

9. Système de fixation selon la revendication 8, **caractérisé en ce que**, en tant que moyens augmentant la friction avec le rail profilé (50), des cannelures (12.3) sont prévues.

10. Système de fixation selon la revendication 1, **caractérisé en ce que** la lame de serrage (14) présente une section transversale en forme de L, la longueur (a) d'une première branche (14.1) étant supérieure à l'épaisseur (d) du rail profilé (50) au niveau des perçages (53, 54, 56).

11. Système de fixation selon la revendication 10, **caractérisé en ce que** la longueur (b) d'une deuxième branche (14.2) est choisie de façon à ce que la lame de serrage (14) recouvre au moins partiellement le filetage interne (12.1, 12.2) du corps (12).

12. Système de fixation selon la revendication 1, **caractérisé en ce que** la lame de serrage (14) comprend au moins un évidement (14.5) qui dégage des marquages (58) réalisés sur le rail profilé (50) dans une position exacte par rapport au rail profilé (50).

13. Système de fixation selon la revendication 1, **caractérisé en ce que** le corps (12) et/ou la lame de serrage (14) comprend au moins un téton (14.6) dépassant dans l'espace libre (13), qui maintient le connecteur rapide (10) dans une position exacte par rapport au rail profilé (50), dans laquelle le téton (14.6) est logé dans un évidement ou un passage dans le rail profilé (50).

14. Système de fixation selon l'une des revendications précédentes, **caractérisé en ce que** le rail profilé (50) fait partie d'une disposition de montage, les perçages (52, 54, 56) étant disposés à des intervalles réguliers en direction du rail profilé (50) et trois perçages (52, 54, 56) successifs définissant une unité de hauteur d'un cadre de rack.

15. Système de fixation selon l'une des revendications précédentes, **caractérisé en ce que** le connecteur rapide (10) comprend un élément d'équilibrage de potentiel (24) qui comprend ou est constitué d'un matériau électro-conducteur, s'étend dans l'espace libre (13) et est mis en contact électrique avec le filetage interne (12.1, 12.2).

16. Système de fixation selon la revendication 15, **caractérisé en ce que** l'élément d'équilibrage de potentiel (24) dépasse en outre d'une surface (25) de la lame de serrage (14) qui est opposée à l'espace libre (13).

17. Système de fixation selon la revendication 15 ou 16, **caractérisé en ce que** la lame de serrage (14) est constituée d'un premier matériau et l'élément d'équilibrage de potentiel (24) est constitué d'un deuxième matériau, le premier matériau étant plus souple que le premier matériau, l'élément d'équilibrage de potentiel (24) dépassant, avec une portion d'appui (28), qui devient une pointe de contact (26), dans l'espace libre (13), de façon à ce que la pointe de contact (26) soit comprimée, lors de la pose du connecteur rapide (10) sur le rail profilé (50), par la surface (25) de la lame de serrage (14), qui est opposée à l'espace libre (13).

18. Système de fixation selon la revendication 17, **caractérisé en ce que** la pointe de contact (26) de l'élément d'équilibrage de potentiel (24) est entouré par le premier matériau de la lame de serrage (14) de manière à être protégée contre les contacts, et est comprimée hors de la lame de serrage (14) lors de la pose du connecteur rapide (10) sur le rail profilé (50).

19. Système de fixation selon l'une des revendications précédentes, **caractérisé en ce que** le connecteur rapide (10) comprend un élément d'équilibrage de potentiel (24) qui comprend ou est constitué d'un matériau électro-conducteur, s'étend dans l'espace libre (13) de façon à ce que, lors de la pose sur le rail profilé (50), un contact électrique soit établi avec le rail profilé (50) par l'intermédiaire de l'élément d'appui (28) et à ce que la pointe de contact (26) soit en contact électrique, par l'intermédiaire de la surface (25), avec un autre composant, plus particulièrement un appareil électrique.

20. Système de fixation selon l'une des revendications précédentes, **caractérisé en ce que** le corps (12) est constitué de matière plastique et la lame de serrage (14) est constitué de métal, la lame de serrage (14) étant reliée d'une seule pièce et de manière inamovible avec le corps (12) et de préférence coulée dans le corps (12).

21. Système de fixation selon la revendication 20, **caractérisé en ce que** la lame de serrage (14) comprend, au niveau de sa deuxième branche (14.2), au moins un ressort de contact réalisé sous la forme d'un creux et dépassant dans l'espace libre (13) pour le branchement électrique du rail profilé (50).

22. Système de fixation selon la revendication 20 ou 21, **caractérisé en ce que** la lame de serrage (14) comprend, au niveau de sa surface (25) opposée à l'espace libre (13), au moins un ressort de contact réalisé sous la forme d'un creux pour le branchement électrique d'un appareil électrique.

23. Système de fixation selon l'une des revendications précédentes, **caractérisé en ce que** le connecteur rapide (10) est mis à disposition sous la forme d'un produit sans fin, en rouleaux ou en forme de tiges avec une pluralité de filetage internes (12.1, 12.2...), le corps (12) du connecteur rapide (10) est divisé en portions de boîtiers identiques ou se distinguant par leur longueur, qui présentent un nombre déterminé de filetage internes (12.1, 12.2...) et les portions de boîtiers étant reliées entre elles par l'intermédiaire de lignes de rupture.

24. Système de fixation selon l'une des revendications précédentes, **caractérisé en ce que** plusieurs connecteurs rapides (10) sont disposés le long d'une bande de liaison pouvant être découpée selon les besoins en respectant la distance ou un multiple entier de la distance entre les filetages internes (12.1, 12.2...).
